# EUROPÄISCHE PATENTSCHRIFT

(11) **EP 4 016 208 B1**
(45) Veröffentlichungstag und Bekanntmachung des Hinweises auf die Patenterteilung: **16.10.2024**
(21) Anmeldenummer: 21212462.2
(22) Anmeldetag: 06.12.2021
(51) Int. Cl.: G05B 19/042

(54) **VERFAHREN ZUM STEUERN EINES STELLGLIEDES EINER VORRICHTUNG MIT EINER RECHENEINHEIT**
METHOD FOR CONTROLLING AN ACTUATOR OF A DEVICE WITH A COMPUTING UNIT
PROCÉDÉ DE COMMANDE D'UN ACTIONNEUR D'UN DISPOSITIF DOTÉ D'UNE UNITÉ DE CALCUL

(30) Priorität: 16.12.2020 DE 102020216015
(43) Veröffentlichungstag der Anmeldung: 22.06.2022
(73) Patentinhaber: Siemens Mobility GmbH, 81739 München (DE)
(72) Erfinder: Braband, Jens, 38106 Braunschweig (DE)
(74) Vertreter: Siemens Patent Attorneys

(56) Entgegenhaltungen:
- DE-A1- 102013 215 207
- US-B2- 7 801 332

## Beschreibung

Die Erfindung betrifft ein Verfahren zum Steuern eines Stellgliedes einer Vorrichtung mit einer Recheneinheit. Außerdem betrifft die Erfindung eine Recheneinheit und ein System mit einer Recheneinheit zum Ausführen des Verfahrens zum Steuern eines Stellgliedes einer Vorrichtung mit einer Recheneinheit.

Aus der Druckschrift DE 10 2013 215 207 A1 sind ein Verfahren und ein Sensorsystem zum Überwachen eines Raumbereiches, insbesondere eines so genannten Gefahrraumes wie etwa eines Bahnüberganges, bekannt.

Anwendungen, die eine künstliche Intelligenz verwenden, sind derzeit nicht für sicherheitsrelevante Prozesse zugelassen. Aufgrund der analytisch nicht nachvollziehbaren Funktionsweise der künstlichen Intelligenzen sind diese zur Gewährleitung der Sicherheit in ihrer Funktionsweise entsprechend zu überprüfen und im Betrieb zu überwachen.

Hierzu können beispielsweise redundante künstliche Intelligenzen verwendet werden, bei denen überkreuz Ergebnisse der einen künstlichen Intelligenz zur Überprüfung der Ergebnisse der jeweils anderen künstlichen Intelligenz verwendet werden. Dies bedarf jedoch eine redundante Verwendung von Software und gegebenenfalls Hardware, was beides sowohl die Kosten als auch die Komplexität eines solchen Systems erhöhen.

Aus der Druckschrift US 7,801,332 B2 ist ein Verfahren mit den Merkmalen des Oberbegriffes des Patentanspruches 1 bekannt.

Der Erfindung liegt die Aufgabe zugrunde, ein verbessertes Verfahren zum Steuern eines Stellgliedes einer Vorrichtung mit einer Recheneinheit anzugeben. Der Erfindung liegt ferner die Aufgabe zugrunde eine Recheneinheit und ein System mit einer Recheneinheit zum Ausführen des Verfahrens bereitzustellen.

Diese Aufgabe wird durch ein Verfahren zum Steuern eines Stellgliedes einer Vorrichtung mit einer Recheneinheit, eine Recheneinheit und ein System mit einer Recheneinheit der unabhängigen Ansprüche gelöst. Vorteilhafte Ausgestaltungen sind in den Unteransprüchen angegeben.

Gemäß einem Aspekt der Erfindung wird ein Verfahren zum Steuern eines Stellgliedes einer Vorrichtung mit einer Recheneinheit bereitgestellt, umfassend:
- Erkennen eines Objekts und Ermitteln von Eigenschaften des Objekts durch eine zweite Recheneinheit basierend auf Sensorsignalen wenigstens einer Sensoreinheit;
- Vergleichen wenigstens einer Eigenschaft der durch die zweite Recheneinheit ermittelten Eigenschaften des Objekts mit einer entsprechenden Referenz durch die Recheneinheit;
- Steuern des Stellgliedes unter Berücksichtigung der durch die zweite Recheneinheit ermittelten Eigenschaften des Objekts durch die Recheneinheit, wenn die wenigstens eine Eigenschaft der durch die zweite Recheneinheit bestimmten Eigenschaften des Objekts eine vorgegebene Ähnlichkeit zu der Referenz aufweist;
- Bereitstellen eines weiteren Objekts, das in der wenigstens einen Eigenschaft mit dem Objekt übereinstimmt;
- Erkennen des weiteren Objekts und Ermitteln von Eigenschaften des weiteren Objekts durch die zweite Recheneinheit basierend auf Sensorsignalen der Sensoreinheit;
- Vergleichen einer ersten Anzahl der durch die zweite Recheneinheit ermittelten Eigenschaften des weiteren Objekts mit einer entsprechenden Anzahl von Referenzen durch die Recheneinheit, wobei die erste Anzahl von Eigenschaften die wenigstens eine Eigenschaft und wenigstens eine weitere Eigenschaft umfasst; und
- Steuern des Stellgliedes unter Berücksichtigung der durch die zweite Recheneinheit ermittelten Eigenschaften des Objekts durch die Recheneinheit, wenn jede Eigenschaft der ersten Anzahl der durch die zweite Recheneinheit ermittelten Eigenschaften des weiteren Objekts eine vorgegebene Ähnlichkeit zu einer entsprechenden Referenz aufweist;
wobei erfindungsgemäß durch die Recheneinheit das Stellglied unter Berücksichtigung der von der zweiten Recheneinheit ermittelten Eigenschaften des Objekts für einen vorbestimmten Zeitraum gesteuert wird, wenn jede Eigenschaft der ersten Anzahl der durch die zweite Recheneinheit ermittelten Eigenschaften des weiteren Objekts eine vorgegebene Ähnlichkeit zu der entsprechenden Referenz aufweist.

Die Erfindung basiert auf der Idee, eine Steuerung eines Stellgliedes einer Vorrichtung basierend auf einer Objekterkennung von Objekten in einer Umgebung der Vorrichtung zu bewirken. Die Erfindung basiert ferner auf der Idee, ein Funktionsweise und Qualität der Objekterkennung zu überprüfen, um hierdurch eine gesicherte Steuerung zu erreichen.

Hierzu wird eine Objekterkennung von Objekten in der Umgebung der Vorrichtung durchgeführt und Eigenschaften der erkannten Objekte ermittelt. Zur Überprüfung der Objekterkennung werden Eigenschaften, beziehungsweise wenigstens eine Eigenschaft, der in der Objekterkennung bestimmten Eigenschaften mit entsprechenden Referenzen verglichen. Weisen die jeweils in der Objekterkennung bestimmten Eigenschaften eine vorbestimmte Ähnlichkeit zu den jeweiligen Referenzen auf, kann mit einer Wahrscheinlichkeit auf die korrekte Bestimmung aller Eigenschaften der erkannten Objekte geschlossen werden. Die Objekterkennung wird in diesem Fall als funktionsfähig und mit einer gewünschten Qualität beurteilt. Eine Steuerung des Stellgliedes kann somit gesichert unter Berücksichtigung der in der Objekterkennung bestimmten Eigenschaften der erkannten Objekte bewirkt werden, da eine Funktionsfähigkeit der Objekterkennung gewährleistet werden kann. Durch den Vergleich der in der Objekterkennung bestimmten Eigenschaften der erkannten Objekte kann somit während der Steuerung der Vorrichtung die Funktionsweise der Objekterkennung überprüft werden, ohne dass hierzu redundante Hardware- oder Software-Komponenten benötigt werden.

Die Objekterkennung und die Überprüfung der bestimmten Eigenschaften kann durch separate Recheneinheiten durchgeführt werden. Eine Recheneinheit ist im Sinne der Anmeldung durch ein Softwaremodul oder eine Hardwarekomponenten mit einem entsprechenden Softwaremodul gegeben.

Durch das Bereitstellen des weiteren Objektsstehen zum Überprüfen der Funktionsweise der Objekterkennung eine gegenüber den Objekten größere Anzahl von Eigenschaften zur Verfügung, die mit entsprechenden Referenzen verglichen werden können. Durch die zusätzliche Anzahl von Eigenschaften des weiteren Objekts, die mit entsprechenden Referenzen verglichen werden können, kann eine Zuverlässigkeit der Beurteilung der Funktionsweise der Objekterkennung erhöht werden, indem die Wahrscheinlichkeit erhöht werden kann, dass bei Aufweisen der entsprechenden Ähnlichkeit der verglichenen Anzahl von Eigenschaften auch die restlichen Eigenschaften in der Objekterkennung korrekt bestimmt wurden. Hierdurch kann die Vorhersage bzw. Beurteilung der korrekten Funktionsweise der Einheit aus Sensoreinheit und zweiter Recheneinheit basierend auf der Übereinstimmung der ermittelten Eigenschaften mit den jeweiligen Referenzen verbessert werden. Dies ermöglicht eine verbesserte Steuerung des Stellgliedes basierend auf der Objekterkennung durch die zweite Recheneinheit, indem mit einer erhöhten Wahrscheinlichkeit eine korrekte Funktionsweise bzw. eine Fehlfunktion der Objekterkennung durch die zweite Recheneinheit ermittelt werden kann.

Mit dem erfindungsgemäßen Verfahren kann der technische Vorteil erreicht werden, dass eine verbesserte Steuerung des Stellgliedes ermöglicht ist. Basierend auf der Übereinstimmung der ermittelten Eigenschaften der weiteren Objekte kann auf die Richtigkeit der gesamten in der Objekterkennung bestimmten Eigenschaften der weiteren Objekte geschlossen werden. Hierauf basierend kann auf die Richtigkeit der gesamten durch die zweite Recheneinheit ermittelten Eigenschaften aller durch die zweiten Recheneinheit erkannten Objekte geschlossen werden. Insbesondere kann mit einer gewissen Wahrscheinlichkeit darauf geschlossen werden, dass für einen vorbestimmten Zeitraum die Objekterkennung fehlerfrei verlaufen wird. Die Steuerung des Stellgliedes kann somit für den vorbestimmten Zeitraum basierend auf der als korrekt vorhergesagten Objekterkennung durchgeführt werden.

Nach einer Ausführungsform ist vorgesehen, dass das Erkennen der Objekte durch die zweite Recheneinheit für einen vordefinierten Raumbereich durchgeführt wird, und dass der Recheneinheit vor dem Erkennen der Objekte durch die zweite Recheneinheit eine Information über eine Anzahl der Objekte innerhalb des Raumbereichs bereitgestellt ist.

Hierdurch kann der technische Vorteil erreicht werden, dass eine verbesserte Überprüfbarkeit der Funktionsweise der Objekterkennung und damit verbunden eine verbesserte und gesicherte Steuerung des Stellgliedes erreicht werden kann. Durch die Bereitstellung der Information bzgl. der Anzahl der im Raumbereich befindlichen Objekte kann eine bessere Überprüfung der Funktionsweise bzw. Korrektheit der Objekterkennung der zweiten Recheneinheit durch die Recheneinheit erreicht werden, indem die Anzahl der erkannten Objekte bei der Überprüfung berücksichtigt werden kann.

Nach einer Ausführungsform wird für jedes Objekt beim Zugang in den Raumbereich eine Registrierungsinformation erstellt, und wobei die Registrierungsinformation der Recheneinheit bereitgestellt wird.

Hierdurch kann der technische Vorteil erreicht werden, dass eine verbesserte Überprüfbarkeit der Funktionsweise der Objekterkennung durch die zweite Recheneinheit ermöglicht ist. Durch die Bereitstellung der Registrierungsinformation kann der Recheneinheit die Information bzgl. der Anzahl der Objekte innerhalb des Raumbereichs bereitgestellt werden. Darüber hinaus kann über die Registrierung der Objekte beim Zugang in den Raumbereich eine Beschränkung der im Raumbereich befindlichen Objekte erreicht werden. Dies erleichtert das Vergleichen der Eigenschaften der Objekte im Raumbereich mit den vorbestimmten Referenzen, da die Objekteerkennung ausschließlich an ausgewählten Objekten durchgeführt wird. Hierdurch kann erreicht werden, dass für jedes Objekt, das sich im Raumbereich befindet, und für die entsprechenden Eigenschaften entsprechende Referenzen der Recheneinheit bereitgestellt sind, sodass ein entsprechendes Vergleichen der Eigenschaften der durch die zweite Recheneinheit erkannten Objekte mit den vorbestimmten Referenzen ermöglicht ist.

Nach einer Ausführungsform wird das Bereitstellen des weiteren Objekts, das Erkennen des weiteren Objekts und das Ermitteln der Eigenschaften des weiteren Objekts durch die zweite Recheneinheit basierend auf Sensorsignalen der Sensoreinheit, und das Vergleichen der ersten Anzahl der durch die zweite Recheneinheit ermittelten Eigenschaften des weiteren Objekts mit einer entsprechenden Anzahl von Referenzen durch die Recheneinheit gemäß einem vorbestimmten Zeitplan vor und/oder während des Steuerns des Stellgliedes durchgeführt.

Hierdurch kann der technische Vorteil erreicht werden, dass eine detaillierte Überprüfung der Funktionsweise der Objekterkennung durch die zweite Recheneinheit für einen vorbestimmten Zeitpunkt vor oder während des Steuerns des Stellgliedes durchgeführt werden kann. Das Vergleichen der bestimmten Eigenschaften mit entsprechenden Referenzen kann bei jeder Objektkennung der Objekte durchgeführt werden. Zur zusätzlichen Steigerung der Genauigkeit der Überprüfung der Funktionsweise der Objekterkennung können für ausgewählte Zeitpunkte oder Zeiträume weitere Objekte bereitgestellt werden, um anhand der höheren Anzahl von zum Vergleichen mit Referenzen zur Verfügung stehenden Eigenschaften des weiteren Objekts die Funktionsweise der Objekterkennung zu überprüfen. Dies kann vor der Objekterkennung der Objekte durch die zweite Recheneinheit durchgeführt werden, und somit bereits vor der zur Steuerung des Stellgliedes benötigten Objekterkennung die Funktionsweise dieser durch die zweite Recheneinheit durchgeführten Objekterkennung überprüfen zu können. Alternativ oder zusätzlich können während der Steuerung des Stellgliedes basierend auf der durch die zweite Recheneinheit durchgeführte Objekterkennung weitere Objekte bereitgestellt werden, um somit während der Steuerung stichprobenartig mit erhöhter Genauigkeit die Funktionsweise der Objekterkennung überprüfen zu können. Hierdurch kann die Sicherheit und Verlässlichkeit der Steuerung des Stellgliedes erhöhte werden.

Nach einer Ausführungsform werden durch die zweite Recheneinheit basierend auf den Sensorsignalen der Sensoreinheit eine Mehrzahl von Objekten erkannt und für jedes Objekt Eigenschaften ermittelt, und wobei durch die Recheneinheit für jedes Objekt eine Mehrzahl von ersten Eigenschaften mit einer Mehrzahl von Referenzen verglichen wird.

Hierdurch kann der technische Vorteil erreicht werden, dass für eine beliebige Anzahl von Objekten und für eine beliebige Anzahl von Eigenschaften die Objekterkennung bzw. die Ermittlung der Eigenschaften durch die zweite Recheneinheit überprüft werden kann. Die Steuerung des Stellgliedes kann somit basierend auf einer Objekterkennung einer Mehrzahl von Objekten durchgeführt werden. Durch den Vergleich der Mehrzahl von Eigenschaften der erkannten Objekte mit entsprechenden Referenzen kann eine Genauigkeit der Überprüfung der Funktionsweise der Objekterkennung durch die zweite Recheneinheit erhöhte werden.

Nach einer Ausführungsform umfasst die zweite Recheneinheit wenigstens eine zur Objekterkennung und Ermittlung von Eigenschaften trainierte künstliche Intelligenz umfasst.

Hierdurch kann der technische Vorteil erreicht werden, dass eine möglichst präzise Objekterkennung und Ermittlung von Eigenschaften ermöglicht ist.

Nach einer Ausführungsform sind die Sensoreinheit eine optische Sensoreinheit ist, und wobei die Eigenschaften der Objekte optisch detektierbare Eigenschaften.

Hierdurch kann der technische Vorteil erreicht werden, dass eine möglichst präzise Objekterkennung und Ermittlung von Eigenschaften durch die zweite Recheneinheit erreicht werden kann.

Nach einer Ausführungsform umfassen die Objekte Personen umfassen, und wobei die Eigenschaften der Objekte Positionen und/oder optische Markierungen der Personen.

Hierdurch kann der technische Vorteil erreicht werden, dass eine Steuerung des Stellgliedes unter Berücksichtigung einer Positions- und Merkmalserkennung von Personen durchgeführt werden kann. Insbesondere kann eine Steuerung des Stellgliedes unter Berücksichtigung einer Position der Personen bzw. von optischen Markierungen der Personen durchgeführt werden. Hierdurch kann die Steuerung des Stellgliedes basierend auf sicherheitsrelevanten Gesichtspunkten durchgeführt werden.

Nach einer Ausführungsform umfassen die Objekte Schienenfahrzeuge umfassen, und wobei die Eigenschaften der Objekte Positionen und/oder optische Markierungen und/oder Bauarten der Schienenfahrzeuge.

Hierdurch kann der technische Vorteil erreicht werden, dass die Steuerung des Stellgliedes unter Berücksichtigung von Positionen und optischen Markierungen von Schienenfahrzeugen durchgeführt werden kann. Das erfindungsgemäße Verfahren kann somit im Bereich des Schienenverkehrs eingesetzt werden.

Nach einer Ausführungsform sind die Referenzen Eigenschaften der Objekte entsprechen, die vor Bestimmung durch die zweite Recheneinheit bekannt und der Recheneinheit bereitgestellt.

Hierdurch kann der technische Vorteil erreicht werden, dass eine verbesserte Überprüfung der Funktionsweise der Objekterkennung und Merkmalsbestimmung durch die zweite Recheneinheit ermöglicht ist. Hierzu sind die Referenzen durch vorbekannte Eigenschaften der Objekte gegeben, die vor Durchführung der Objekterkennung der Recheneinheit bereitgestellt sind. Durch Abgleich der in der Objekterkennung bestimmten Eigenschaften mit den vorbekannten Eigenschaften der Objekte kann somit direkt die Funktionsweise der Objekterkennung überprüft werden. Die vorbekannten Eigenschaften stellen hierbei die Eigenschaften dar, die eine korrekt funktionierende Objekterkennung bestimmen müsste. Bei Übereinstimmung der bestimmten Eigenschaften mit den vorbekannten Eigenschaften kann gesichert gesagt werden, dass die Objekterkennung fehlerfrei die tatsächlichen Eigenschaften der erkannten Objekte ermittelt. Nach einem zweiten Aspekt wird ein Computerprogrammprodukt umfassend Befehle bereitgestellt, die bei der Ausführung des Programms durch eine Recheneinheit und eine zweite Recheneinheit diese Recheneinheiten veranlassen, das er-findungsgemäße Verfahren nach einer der voranstehenden Ausführungsformen auszuführen.

Nach einem dritten Aspekt wird ein System mit einer Rechen-einheit und einer zweiten Recheneinheit bereitgestellt, die ausgebildet sind, das erfindungsgemäße Verfahren nach einer der voranstehenden Ausführungsformen auszuführen.

Die oben beschriebenen Eigenschaften und Vorteile dieser Erfindung sowie die Art und Weise, wie diese erreicht werden, werden klarer und deutlicher verständlich durch die Erläuterungen der folgenden, stark vereinfachten, schematischen Darstellungen bevorzugter Ausführungsbeispiele. Hierbei zeigen in jeweils schematisierter Darstellung
- FIG 1: eine graphische Darstellung eines Verfahrens zum Steuern eines Stellgliedes einer Vorrichtung mit einer Recheneinheit;
- FIG 2: eine graphische Darstellung des erfindungsgemäßen Verfahrens zum Steuern eines Stellgliedes einer Vorrichtung mit einer Recheneinheit;
- FIG 3: ein Ablaufdiagramm eines Verfahrens zum Steuern eines Stellgliedes einer Vorrichtung mit einer Recheneinheit gemäß einer Ausführungsform; und
- FIG 4: eine schematische Darstellung eines Computerprogrammprodukts.

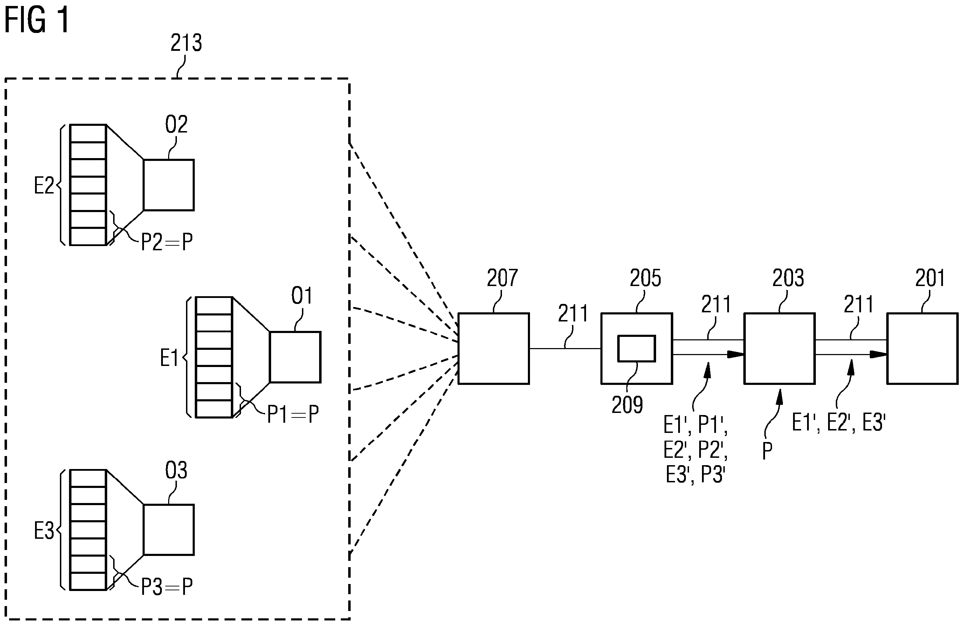

FIG 1 zeigt eine graphische Darstellung eines Verfahrens 100 zum Steuern eines Stellgliedes 201 einer Vorrichtung mit einer Recheneinheit 203.

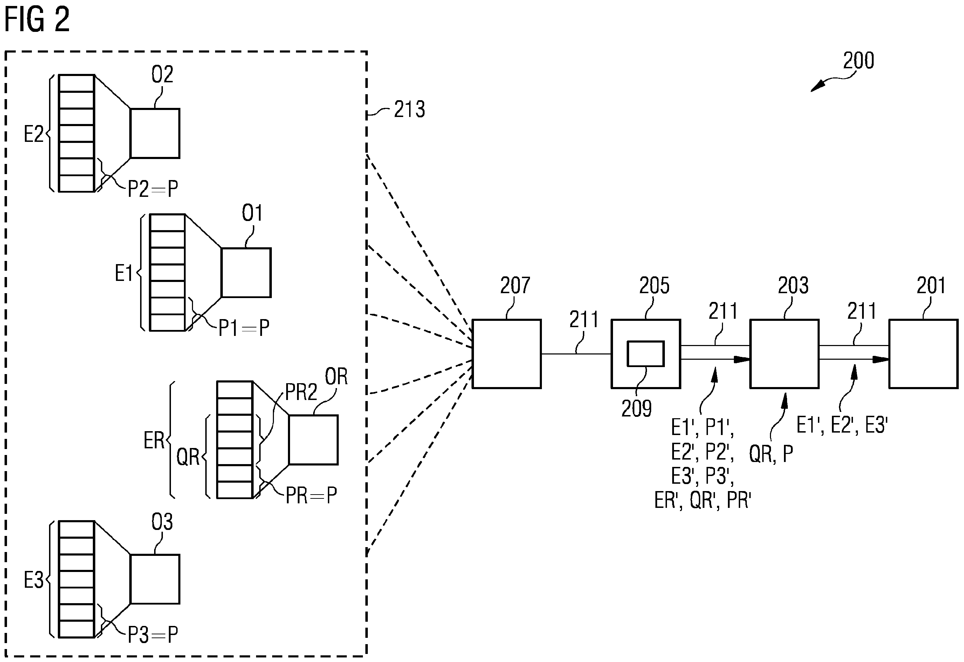

FIG 2 zeigt eine graphische Darstellung eines erfindungsgemäßen Verfahrens 100 zum Steuern eines Stellgliedes 201 einer Vorrichtung mit einer Recheneinheit 203.

In den Figuren 1 und 2 werden also graphisch Ausführungsformen eines Verfahrens 100 zum Steuern eines Stellgliedes 201 einer Vorrichtung mit einer Recheneinheit 203 illustriert, wobei die Figur 2 das erfindungsgemäße Verfahren illustriert.

Die Erfindung basiert auf der Idee, eine Steuerung eines Stellgliedes basierend auf einer Objekterkennung von Objekten in einer Umgebung der Vorrichtung zu bewirken. Ferner basiert die Erfindung auf der Idee eine Überprüfung der Objekterkennung durchzuführen, um eine gesicherte Steuerung gewährleisten zu können.

In Figur 1 ist ein System 200 mit einem Stellglied 201, einer Recheneinheit 203, einer zweiten Recheneinheit 205 und einer Sensoreinheit 207, die jeweils über eine Datenverbindung 211 miteinander verbunden sind. Die zweite Recheneinheit 205 umfasst in der gezeigten Ausführungsform eine künstliche Intelligenz 209, beispielsweise ein künstliches neuronales Netz. Die zweite Recheneinheit 205 ist damit eingerichtet, basierend auf Sensorsignalen der Sensoreinheit 207 eine Objekterkennung von Objekten in einer Umgebung des Systems 200 durchzuführen.

Die Recheneinheit 203 und die zweite Recheneinheit 205 können beispielsweise durch Softwaremodule oder Hardwarekomponenten mit entsprechenden Softwaremodulen ausgebildet sein. Die Recheneinheit 203 und die zweite Recheneinheit 205 können beispielsweise auf einer gemeinsamen Datenverarbeitungsanlage betrieben werden. Alternativ können die Recheneinheit 203 und die zweite Recheneinheit 205 auch auf voneinander getrennt und individuell betreibbaren Datenverarbeitungsanlagen eingerichtet sein.

Die Sensoreinheit 207 kann beispielsweise als eine optische Sensoreinheit, wie eine RGB-Kamera, eine Stereokamera, ein Lidarsystem oder ein vergleichbares optisches System ausgebildet sein.

In der gezeigten Ausführungsform sind drei Objekte O1, O2, O3 in einem vorbestimmten Raumbereich 213 angeordnet, der durch die Sensoreinheit 207 beobachtbar ist. Durch die Sensoreinheit 207 können somit Bildaufnahme der Objekte O1, O2, O3 erstellt werden, basierend auf deren eine Objekterkennung durch die zweite Recheneinheit 205 durchgeführt werden kann.

Die Objekte O1, O2, O3 weisen jeweils Eigenschaften E1, E2, E3 auf.

In der gezeigten Ausführungsform können die Objekte O1, O2, O3 beispielsweise durch Schienenfahrzeuge gegeben sein. Die Schienenfahrzeuge können beispielsweise innerhalb eines Kontrollbereichs, wie beispielsweise einem Depot oder einer Rangierhalle bzw. einem Rangierbahnhof, der durch den Raumbereich 213 dargestellt ist, angeordnet sein. Die einzelnen durch die Objekte O1, O2, O3 dargestellten Schienenfahrzeuge weisen jeweils individuelle Eigenschaften E1, E2, E3 auf. Die einzelnen Schienenfahrzeuge können sich hierbei in verschiedenen Eigenschaften unterscheiden oder in verschiedenen miteinander übereinstimmen.

Eigenschaften E1, E2, E3 der einzelnen Schienenfahrzeuge können hierbei durch den Fahrzeugtyp, visuelle Fahrzeugmarkierungen, Gehäuselackierungen, Positionen des Schienenfahrzeugs innerhalb des Raumbereichs 213 oder andere visuell erkennbare Eigenschaften gegeben sein.

Jedes der Schienenfahrzeuge O1, O2, O3 weist jeweils wenigstens eine Eigenschaft P1 P2, P3 auf, die zeitlich vor Durchführung der Objekterkennung durch die zweite Recheneinheit 205 der Recheneinheit 203 bekannt und dieser bereitgestellt ist, beispielsweise in einer entsprechenden Datenbaken. Derart vorbekannte Eigenschaften P1, P2, P3 der einzelnen Objekte O1, O2, O3 können hierbei beispielsweise Fahrzeugkennziffern sein. Vor Durchführung der Objekterkennung kann somit als Information in der Recheneinheit 203 gespeichert sein, dass in dem Raumbereich 213, beispielsweise dem Fahrzeugdepot, ausschließlich die Fahrzeuge mit den vorbekannten Fahrzeugnummern angeordnet sind. Alternativ können die vorbekannten Eigenschaften P1, P2, P3 Positionen der einzelnen Fahrzeuge innerhalb des Raumbereichs 213 sein, so dass der Recheneinheit 203 Informationen bzgl. der Positionierung der einzelnen im Raumbereich 213 angeordneten Fahrzeuge O1, O2, O3 bereitgestellt sind.

In der gezeigten Ausführungsform sind für jedes der Fahrzeuge bzw. Objekte O1, O2, O3 jeweils zwei in der Figur 1 durch die graphisch dargestellten Eigenschaftseinheiten gekennzeichnet e Eigenschaften P1, P2, P3 vorbekannt und in der Recheneinheit 203 gespeichert bzw. dieser bereitgestellt. Die einzelnen Objekte O1, O2, O3 können in den vorbekannten Eigenschaften P1, P2, P3 übereinstimmen, beispielsweise können in dem Raumbereich 213 ausschließlich Schienenfahrzeuge eines gemeinsamen Fahrzeugtyps angeordnet sein. Alternativ können die einzelnen Objekte O1, O2, O3 in den vorbekannten Eigenschaften P1, P2, P3 unterschiedlichen sein. Die restlichen Eigenschaften der Fahrzeuge bzw. Objekte O1, O2, O3, die nicht den vorbekannten Eigenschaften P1, P2, P3 entsprechen, sind vor Objekterkennung durch die zweite Recheneinheit 205 der Recheneinheit 203 nicht bekannt.

Alternativ oder zusätzlich können Objekte O1, O2, O3 durch Personen gegeben sein, die sich zum Zeitpunkt der Objekterkennung durch die zweite Recheneinheit 205 im Bereich 213, beispielsweise im Fahrzeugdepot, aufhalten.

Der Raumbereich 213, beispielsweise das Fahrzeugdepot, kann hierbei durch einen Kontrollbereich gegeben sein, bei dem bei Zugang der einzelnen Objekte O1, O2, O3, beispielsweise der Schienenfahrzeuge oder der Personen, in den Raumbereich 213 eine Registrierung vorgenommen wird. Durch die Registrierung kann der Recheneinheit 203 somit eine Anzahl der Objekte O1, O2, O3 im Raumbereich 213 bereitgestellt werden.

In der gezeigten Ausführungsform kann die Steuerung des Stellgliedes 201 beispielsweise das Rangieren eines weiteren Schienenfahrzeugs bzw. eines der Schienenfahrzeuge O1, O2, O3 im Raumbereich 213 umfassen, das basierend auf den bereits im Raumbereich 213 befindlichen Objekten O1, O2, O3 durchgeführt wird. Alternativ hierzu kann das Steuern des Stellgliedes 201 das Auslösen einer Alarmfunktion umfassen, das basierend auf den Anordnungen der einzelnen Objekte O1, O2, O3 im Raumbereich 213 geführt wird, sobald eine Gefahrensituation ermittelt wird. Die Vorrichtung kann demzufolge eine entsprechende Rangiervorrichtung sein. Alternativ hierzu kann die Steuerung des Stellgliedes 201 eine Belade- oder Entladefunktion darstellen, für die einzelnen Schienenfahrzeuge O1, O2, O3 individuelle erkannt und gegebenenfalls der Ladungszustand, variabel gestaltet sein kann, bestimmt werden muss. Die Vorrichtung kann demzufolge eine entsprechende Belade- Entladevorrichtung sein.

Zum Steuern des Stellgliedes 201 wird basierend auf Sensorsignalen der Sensoreinheit 207 durch die zweite Recheneinheit eine Objekterkennung der Objekte O1, O2, O3 im Raumbereich 213 durchgeführt. Hierzu nimmt die Sensoreinheit 207 entsprechende optische Daten, beispielsweise Bilddaten einer RGB-Kamera, auf und sendet diese über die Datenverbindung 211 an die zweite Recheneinheit 205. Diese führt eine entsprechende Objekterkennung der im Raumbereich 213 angeordneten Objekte O1, O2, O3 durch. Die Objekterkennung kann hierbei für jedes Objekt einzeln durchgeführt werden. Alternativ kann eine simultane Erkennung aller im Raumbereich 213 angeordneter Objekte O1, O2, O3 durchgeführt werden. Durch die zweite Recheneinheit 205 werden hierbei für jedes Objekt O1, O2, O3 entsprechende Eigenschaften E1', P1' bzw. E2', P2' bzw. E3', P3' ermittelt.

Gemäß der folgenden Notation beschreiben Eigenschaft E1, E2, E3 tatsächliche Eigenschaften, die die jeweiligen Objekt O1, O2, O3 in Realität aufweisen. Die durch die zweite Recheneinheit 205 während der Objekterkennung ermittelten Eigenschaften E1', E2', E3' basieren auf den Signalen der Sensoreinheit 207. Die durch die zweite Recheneinheit 205 ermittelten Eigenschaften E1', E2', E3' können bei einer fehlerhaften Objekterkennung von den tatsächlichen Eigenschaften E1, E2, E3 der Objekte O1, O2, O3 abweichen. Bei einer korrekt durchgeführten Objekterkennung durch die zweite Recheneinheit 205 entsprechen die durch die zweite Recheneinheit 205 ermittelten Eigenschaften E1', E2', E3' gemäß einer vorbestimmten Ähnlichkeit den tatsächlich in Realität auftretenden Eigenschaften E1, E2, E3 der Objekte O1, O2, O3. Eigenschaften P1, P2, P3 entsprechen hierbei einer Untermenge der Eigenschaften E1, E2, E3 der Objekte O1, O2, O3 und sind dadurch gekennzeichnet, dass diese zeitlich vor Durchführung der Objekterkennung der Recheneinheit 203 bekannt und bereitgestellt sind. Die Eigenschaften P1', P2', P3' sind hingegen die entsprechenden durch die Objekterkennung bestimmten Eigenschaften.

Darauffolgend werden die von der zweiten Recheneinheit 205 ermittelten Eigenschaften E1', P1' bzw. E2', P2' bzw. E3', P3' über die Datenverbindung 211 an die Recheneinheit 203 übermittelt. Die zweite Recheneinheit 205 bestimmt hierbei beispielsweise für jedes Objekt O1, O2, O3 eine Position innerhalb des Raumbereichs 213, einen Fahrzeugtyp, eine Gehäuselackierung bzw. eine Fahrzeugidentifikationskennzeichnung. Die bereits vorbekannten Eigenschaften P1, P2, P3 können hierbei beispielsweise für jedes Fahrzeug O1, O2, O3 die individuelle Fahrzeugidentifikationskennzeichnung und die jeweilige Position innerhalb des Raumbereichs 213 gegeben sein.

Darauffolgend vergleicht die Recheneinheit 203 die durch die zweite Recheneinheit 205 für jedes Objekt O1, O2, O3 ermittelten Eigenschaften P1', P2', P3' mit den der Recheneinheit 203 bereits bekannten Eigenschaften P1, P2, P3. Die Recheneinheit 203 hat somit Informationen bzgl. der einzelnen Fahrzeugidentifikationskennzeichnungen, mit der jedes Fahrzeug identifiziert werden kann, und den jeweiligen Positionen, an denen die identifizierten Fahrzeuge positioniert sind.

Durch Vergleichen dieser der Recheneinheit 203 vorbekannten Eigenschaften P1, P2, P3 mit den durch die zweite Recheneinheit 205 ermittelten Eigenschaften P1', P2', P3' kann durch die Recheneinheit 203 die Funktionsweise der Objekterkennung durch die zweite Recheneinheit 205 überprüft werden.

Bei Übereinstimmung der durch die zweite Recheneinheit 205 ermittelten Eigenschaften P1', P2', P3' mit den tatsächlichen Eigenschaften P1, P2, P3 der Objekte O1, O2, O3 kann darauffolgend eine Steuerung des Stellgliedes 201 durch die Recheneinheit 203 basierend auf den durch die zweite Recheneinheit 205 ermittelten Eigenschaften E1', E2', E3' der Objekte O1, O2, O3 bewirkt werden. Beispielsweise kann somit basierend auf der Objekterkennung der Schienenfahrzeuge O1, O2, O3 im Raumbereich 213, beispielsweise dem Fahrzeugdepot, ein Rangieren eines weiteren Schienenfahrzeugs innerhalb des Depots 213 vorgenommen werden. Alternativ hierzu kann ein weiteres Merkmal der Objekte O1, O2, O3 eine Beladung der Schienenfahrzeuge umfassen. Basierend auf der Objekterkennung durch die zweite Recheneinheit 205 und den ermittelten Eigenschaften E1', E2', E3' kann durch Steuerung des Stellgliedes 201 eine Endlagerung der Fahrzeuge O1, O2, O3 vorgenommen werden.

FIG 2 zeigt eine graphische Darstellung des erfindungsgemäßen Verfahrens 100 zum Steuern eines Stellgliedes 201 einer Vorrichtung mit einer Recheneinheit 203.

Die in Figur 2 gezeigte Ausführungsform des erfindungsgemäßen Verfahrens 100 basiert auf der Ausführungsform in Figur 1 und umfasst alle dort gezeigten Komponenten. Sofern diese in Figur 2 unverändert bleiben, wird von einer erneuten detaillierten Beschreibung abgesehen.

In Figur 2 ist in den Raumbereich 213 ein weiteres Objekte OR bereitgestellt. Das weitere Objekt OR umfasst Eigenschaften ER. Diese umfassen eine erste Anzahl von vorbekannten Eigenschaften QR, die vor Durchführung der Objekterkennung durch die zweite Recheneinheit 205 der Recheneinheit 203 bereitgestellt und gegebenenfalls in dieser gespeichert sind. Die erste Anzahl von Eigenschaften QR umfasst hierbei die vorbekannten Eigenschaften PR, die in der obengenannten Ausführungsform beispielsweise die Position des Fahrzeugs innerhalb des Raumbereichs 213 bzw. die individuelle Identifizierungskennung des Fahrzeugs umfassen. Darüber hinaus umfasst die erste Anzahl von Eigenschaften QR wenigstens eine weitere Eigenschaft PR2. In der gezeigten Ausführungsform umfasst die Anzahl von Eigenschaften QR eine Mehrzahl von weiteren Eigenschaften PR2. Die Anzahl von Eigenschaften QR beschreibt hierbei für das weitere Objekt OR die vorbekannten Eigenschaften, die vor Durchführung der Objekterkennung durch die zweite Recheneinheit 205 der Recheneinheit 203 bekannt und gegebenenfalls in dieser gespeichert sind.

Das weitere Objekt OR zeichnet sich hierbei gegenüber den anderen Objekten O1, O2, O3 dadurch aus, dass eine größere Anzahl von Eigenschaften vorbekannt ist. Beispielsweise kann für das weitere Objekt OR neben der Position innerhalb des Raumbereichs 213 und der individuellen Identifizierungskennung der Fahrzeugtyp, die Fahrzeugfarbe und gegebenenfalls die Fahrzeugladung vorbekannt sein.

Die zweite Recheneinheit 205 führt nach Bereitstellen des weiteren Objekts OR eine Objekterkennung durch, in der das weitere Objekt OR erkannt und Eigenschaften ER', QR', PR' durch die zweite Recheneinheit 205 ermittelt werden. Alternativ hierzu kann ebenfalls eine Objekterkennung der Objekte O1, O2, O3 gemäß dem Verfahrensschritt 103 durchgeführt werden.

Die durch die zweite Recheneinheit 205 ermittelten Eigenschaften wenigstens des weiteren Objekts OR, ER', QR', PR' werden über die Datenverbindung 211 an die Recheneinheit 203 weitergeleitet, die einen Vergleich der durch die zweite Recheneinheit 205 für das weitere Objekt OR ermittelten Eigenschaften QR' mit den der Recheneinheit 203 vorbekannten tatsächlichen Eigenschaften QR des weiteren Objekts OR durchführt. Stimmen die durch die zweite Recheneinheit ermittelten Eigenschaften QR' des weiteren Objekts OR gemäß der vorbestimmten Ähnlichkeit mit den tatsächlichen Eigenschaften QR des weiteren Objekts OR überein, so kann mit einer erhöhten Wahrscheinlichkeit auf die korrekte Ermittlung der vollständigen Eigenschaften ER' des weiteren Objekts OR geschlossen werden. Aufgrund der größeren Anzahl der vorbekannten Eigenschaften des weiteren Objekts OR im Vergleich zu den vorbekannten Eigenschaften P1, P2, P3 für die Objekte O1, O2, O3 kann mit einer erhöhten Wahrscheinlichkeit auf die korrekte Ermittlung der gesamten Eigenschaften ER' des weiteren Objekts OR geschlossen werden.

Die Genauigkeit der Überprüfung der Funktionsweise der Objekterkennung durch die zweite Recheneinheit 205 bzw. die Genauigkeit der Vorhersage der korrekten Ermittlung der gesamten Eigenschaften E1', E2', E3' der durch die zweite Recheneinheit 205 erkannte Objekte O1, O2, O3, OR kann somit durch das Bereitstellen des weiteren Objekts OR im Raumbereich 213 erhöht werden.

Alternativ hierzu kann gegebenenfalls ein Objekt OR bereitgestellt werden, von dem alle zu ermittelten Eigenschaften ER vorbekannt sind. Im Verfahrensschritt 111 können somit alle durch die zweite Recheneinheit 205 ermittelten Eigenschaften ER' mit den der Recheneinheit 203 vorbekannten Eigenschaften ER des weiteren Objekts verglichen werden und eine Funktionsweise der Objekterkennung für jede ermittelte Eigenschaft vorgenommen werden.

Nach Überprüfung der Funktionsweise der Objekterkennung der zweiten Recheneinheit 205 durch Vergleichen der durch die zweite Recheneinheit ermittelten Eigenschaften des weiteren Objekts OR mit den entsprechenden Referenzen kann bei entsprechender Übereinstimmung der ermittelten Eigenschaften ER' mit den jeweiligen Referenzen auf die Korrektheit der Objekterkennung durch die zweite Recheneinheit 205 geschlossen werden, und basierend auf der Objekterkennung der zweiten Recheneinheit 205 das Stellglied 201 durch die Recheneinheit 203 gesteuert werden. Das weitere Objekt OR kann hierbei ausschließlich zur Überprüfung der Objekterkennung durch die zweite Recheneinheit verwendet werden, so dass die Steuerung des Stellgliedes 201 als ausschließlich basierend auf den durch die zweite Recheneinheit 205 ermittelten Eigenschaften E1', E2', E3' der Objekte O1, O2, O3 durchgeführt wird. Alternativ hierzu kann die Steuerung des Stellglieds 201 ebenfalls basierend auf durch die zweite Recheneinheit 205 ermittelten Eigenschaften ER' des weiteren Objekts OR durchgeführt werden.

Das weitere Objekt OR kann gemäß einer Ausführungsform ausschließlich als ein Referenzobjekt in den Raumbereich 213 eingeführt werden, in dem ein Objekt in den Raumbereich angeordnet wird, von dem die gewünschten Eigenschaften bereits vorbekannt sind. Alternativ hierzu kann das weitere Objekt OR durch ein bereits im Raumbereich befindliches Objekt gegeben sein, von dem zusätzliche Eigenschaften ermittelt werden, beispielsweise durch ein Betriebspersonal oder zusätzliche gesicherte Sensoren, die nicht Bestandteil des Systems 200 sind.

Gemäß einer Ausführungsform können die Objekte O1, O2, O3, OR alternativ oder zusätzlich zu den Schienenfahrzeugen Personen umfassen, die beispielsweise an vorbestimmten Positionen innerhalb des Raumbereichs 213 positioniert sind, um hier entsprechende Arbeiten an entsprechend dort positionierten Arbeitsbereichen durchzuführen. Zusätzlich können die Personen mit entsprechenden Kennzeichnungen oder Symbolen versehen sein, beispielsweise durch Zahlen- oder Buchstabenkombinationen auf entsprechenden Kennzeichnungskleidungsstücken. Ein weiteres Objekt OR kann dabei durch eine Person gegeben sein, die zum Überprüfen der Objekterkennung mit entsprechenden vorbekannten Eigenschaften, wie beispielsweise Bekleidung in einer vorbekannten Farbe oder vorbekannten Kennzeichnungen versehen sein. Eine mit derartigen Eigenschaften versehene Person kann darüber hinaus beispielsweise im Raumbereich 213d ie verschiedenen Positionen nacheinander abgehen, so dass diese Referenzperson somit sowohl Eigenschaften der Bekleidung als auch die einzelnen Positionierungen vorbekannt sind, und diese somit zur Überprüfung der Objekterkennung als Referenzen verwendet werden können

Wird aufgrund der Übereinstimmung der ermittelten Eigenschaften QR' mit den tatsächlichen Eigenschaften QR des weiteren Objekts OR die Objekterkennung durch die zweite Recheneinheit 205 als korrekt funktionsfähig bestimmt, so kann eine Steuerung des Stellglieds 201 für einen vorbestimmten Zeitraum basierend auf der Objekterkennung der zweiten Recheneinheit 205 und den im Zuge der Objekterkennung ermittelten Eigenschaften E1', E2', E3' bzw. ER' der Objekte O1, O2, O3 bzw. OR durchgeführt werden, da mit einer gewissen Wahrscheinlichkeit die als fehlerfrei funktionierende Objekterkennung für den vorbestimmten Zeitraum ebenfalls als fehlerfrei funktionierend angenommen werden kann.

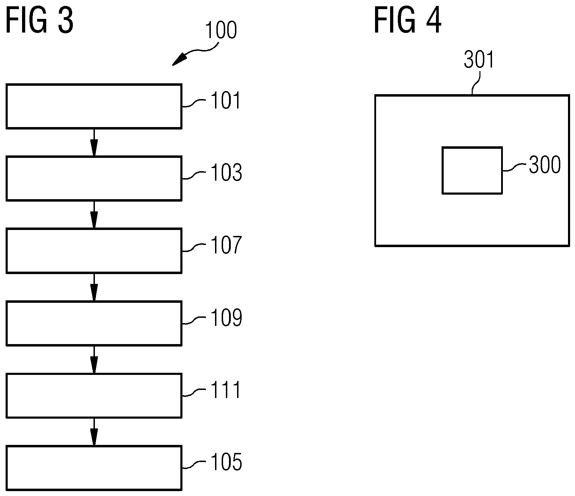

FIG 3 zeigt ein Ablaufdiagramm des Verfahrens 100 zum Steuern eines Stellgliedes 201 einer Vorrichtung mit einer Recheneinheit 203 gemäß einer Ausführungsform.

Das Verfahren 100 ist auf ein System 200 gemäß der Ausführungsform der Figur 2 anwendbar.

Zum Steuern des Stellgliedes 201 mit der Recheneinheit 203 wird zunächst durch eine zweite Recheneinheit 205 in einem Verfahrensschritt 101 eine Objekterkennung wenigstens eines Objekts O1, O2, O3, durchgeführt. Hierzu wird das Objekt O1, O2, O3 erkannt und Eigenschaften des Objekts E1, E2, E3 durch die zweite Recheneinheit 205 basierend auf Sensorsignalen eine Sensoreinheit 207 ermittelt. Die zweite Recheneinheit 205 kann hierzu eine entsprechend zur Objekterkennung trainierte künstliche Intelligenz aufweisen. Die künstliche Intelligenz kann beispielsweise als ein entsprechend trainiertes künstliches neuronales Netz ausgebildet sein, beispielsweise eine convonutional neural network. Wie oben beschrieben kann die Sensoreinheit 207 kann als eine optische Sensoreinheit ausgebildet sein. Die durch die zweite Recheneinheit 205 basierend auf den Sensorsignalen der Sensoreinheit 207 ermittelten Eigenschaften E1, E2, E3 des Objekts O1, O2, O3 können hierbei optisch detektierbare Eigenschaften sein.

In einem weiteren Verfahrensschritt 103 wird wenigstens eine Eigenschaft P1', P2', P3' der durch die zweite Recheneinheit 205 ermittelten Eigenschaften E1', E2', E3' des Objekts O1, O2, O3 durch die Recheneinheit 203 mit einer entsprechenden Referenz P verglichen. Gemäß der oben beschriebenen Ausführungsform kann die Referenz P durch eine tatsächliche Eigenschaft E des Objekts O1, O2, O3 gegeben sein, die vor Durchführung der Objekterkennung der Recheneinheit 203 bekannt und bereitgestellt ist.

In der gezeigten Ausführungsform wird ferner in einem weiteren Verfahrensschritt 107 ein weiteres Objekt OR bereitgestellt. Das weitere Objekt OR ist hierbei derart ausgebildet, dass eine Übereinstimmung des Objekts O1, O2, O3 und des weiteren Objekts OR in der wenigstens einen Eigenschaft P1, P2, P3, PR der Objekte vorliegt.

In einem weiteren Verfahrensschritt 109 wird erneut eine Objekterkennung, in diesem Fall des weiteren Objekts OR, durch die zweite Recheneinheit 205 durchgeführt, bei der das weitere Objekt OR erkannt und Eigenschaften ER des weiteren Objekts OR ermittelt werden.

Das weitere Objekt OR zeichnet sich ferner dadurch aus, dass der Recheneinheit 203 nicht nur das wenigstens eine Merkmal P bekannt ist, sondern darüber hinaus eine erste Anzahl von Eigenschaften Q des weiteren Objekts OR zeitlich vor der Objekterkennung durch die zweite Recheneinheit 205 der ersten Recheneinheit 203 bekannt ist. Die erste Anzahl von Eigenschaften QR umfasst dabei die wenigstens eine Eigenschaft PR und darüber hinaus wenigstens eine zusätzliche Eigenschaft PR2 des weiteren Objekts OR.

In einem weiteren Verfahrensschritt 111 wird durch die erste Recheneinheit 203 die während der Objekterkennung durch die zweite Recheneinheit 205 ermittelte erste Anzahl von Eigenschaften QR' der durch die zweite Recheneinheit ermittelten Eigenschaften ER' des weiteren Objekts OR mit einer entsprechenden Anzahl von Referenzen QR verglichen.

Die erste Anzahl von Referenzen QR, die der Recheneinheit 203 vor Durchführung der Objekterkennung durch die zweite Recheneinheit 205 bekannt und gegebenenfalls in einer entsprechenden Datenbank der Recheneinheit 203 gespeichert sind, entsprechen in der beschriebenen Ausführungsform tatsächlichen Eigenschaften QR des weiteren Objekts OR.

Die Recheneinheit 203 kann hierzu derart ausgebildet sein, einen entsprechenden Vergleich zwischen den durch die zweite Recheneinheit ermittelten Eigenschaften PR' bzw. QR' und den tatsächlichen Eigenschaften PR, QR der Objekte O1, O2, O3, OR durchzuführen.

In einem weiteren Verfahrensschritt 105 wird darauffolgend durch die Recheneinheit 203 eine Steuerung des Stellgliedes 201 unter Berücksichtigung der durch die zweite Recheneinheit 205 ermittelten Eigenschaften E1', E2', E3' des Objekts O1, O2, O3 und/oder unter Berücksichtigung der durch die zweite Recheneinheit 205 ermittelten Eigenschaften ER' des weiteren Objekts OR durchgeführt. Die Steuerung des Stellgliedes 201 durch die Recheneinheit 203 wird hierbei ausschließlich dann durchgeführt, wenn das Vergleichen 103 bzw. das Vergleichen 111 der durch die zweite Recheneinheit 205 ermittelten Eigenschaften P1', P2', P3' des Objekts O1, O2, O3 mit den tatsächlichen Eigenschaften P des Objekts O1, O2, O3 gemäß der vorgegebenen Ähnlichkeit übereinstimmt, bzw. die durch die zweit Recheneinheit 205 ermittelte erste Anzahl von Eigenschaften QR' des weiteren Objekts OR mit den tatsächlichen Eigenschaften QR des weiteren Objekts OR übereinstimmen.

Zur Bestimmung der Ähnlichkeit kann eine Konfidenz verwendet werden, mit der die einzelnen Eigenschaften in der Objekterkennung bestimmt werden. Ein in der Objekterkennung mit einer geringen Konfidenz bestimmte Eigenschaft weist hierbei eine geringe Ähnlichkeit zu der tatsächlichen Eigenschaft auf, bei einer hohen Konfidenz analog eine hohe Ähnlichkeit.

Wie oben beschrieben, können die Objekte O1, O2, O3, OR durch Schienenfahrzeuge gegeben sein, während die Eigenschaften E1, E2, E3, ER Positionen bzw. optische Markierungen der Objekte O1, O2, O3, OR darstellen. Alternativ oder zusätzlich können die Objekte O1, O2, O3, OR durch Personen gegeben werden, die sich an bestimmten Positionen befinden und optische Markierungen aufweisen.

Gemäß einer Ausführungsform kann das Bereitstellen des weiteren Objekts 107, das Durchführen der Objekterkennung 109 des weiteren Objekts OR durch die zweite Recheneinheit 205 und das Vergleichen 111 der Anzahl der durch die zweite Recheneinheit 205 ermittelten Eigenschaften QR' mit der entsprechenden Anzahl von Referenzen zeitlich vor oder während bzw. nach Durchführung der Objekterkennung 101 des Objekts O1, O2, O3 durch die zweite Recheneinheit 205 und des Vergleichens 103 der wenigstens ein durch die zweite Recheneinheit 205 ermittelten Eigenschaft P1', P2', P3' mit der entsprechenden Referenz P durchgeführt werden. Beispielsweise kann das Bereitstellen 107, das Bestimmen der Eigenschaften 109 bzw. das Vergleichen 111 gemäß einem vorbestimmten Zeitplan durchgeführt werden. Durch das Bereitstellen 107 des weiteren Objekts OR und die entsprechende Objekterkennung 109 bzw. das entsprechende Vergleichen 111, kann die Funktionsweise der Objekterkennung bzw. die Funktionsweise der Sensoreinheit 207 somit stichprobenartig überprüft werden.

In den Vergleichsschritten 103 bzw. 111 können die durch die zweite Recheneinheit 205 ermittelten Eigenschaften P1', P2', P3' bzw. QR' mit den tatsächlichen Eigenschaften P1, P2, P3 bzw. QR der Objekte O1, O2, O3, OR verglichen werden. Bei Übereinstimmung der durch die zweite Recheneinheit 205 ermittelten Eigenschaften P1', P2', P3', QR' mit den tatsächlichen Eigenschaften P1, P2, P3, QR der Objekte O1, O2, O3, OR kann auf eine Übereinstimmung der gesamten durch die zweite Recheneinheit 205 ermittelten Eigenschaften E1', E2', E3', ER' mit den tatsächlichen Eigenschaften E1, E2, E3, ER der Objekte O1, O2, O3, OR geschlossen werden. Eine Übereinstimmung der durch die zweite Recheneinheit 205 ermittelten Eigenschaften P1', P2', P3', QR' mit den tatsächlichen Eigenschaften P1, P2, P3, QR der Objekte O1, O2, O3, OR liegt hierbei dann vor, wenn die durch die zweite Recheneinheit 205 ermittelten Eigenschaften P1', P2', P3', QR' eine vorbestimmte Ähnlichkeit zu den in der Recheneinheit 203 gespeicherten Daten bzw. Informationen bzgl. der tatsächlichen Eigenschaften P1, P2, P3, QR der Objekte O1, O2, O3, OR vorliegt. Ein Vergleich der durch die zweite Recheneinheit 205 ermittelten Eigenschaften P1', P2', P3', QR' mit den in der Recheneinheit 203 gespeicherten Informationen bzgl. der tatsächlichen Eigenschaften P1, P2, P3, QR kann durch die Recheneinheit 203 gemäß entsprechender aus dem Stand der Technik bekannter Vergleichsalgorithmen durchgeführt werden.

Die Objekterkennung durch die zweite Recheneinheit 205 kann ebenfalls durch aus dem Stand der Technik bekannten Objekterkennungsprozessen, beispielsweise durch entsprechende Segmentierung der Bildaufnahmen der Sensoreinheit 207, durchgeführt werden.

Gemäß der oben gezeigten Ausführungsform kann die Objekterkennung 101 des Objekts O1, O2, O3 durch die zweite Recheneinheit 205 für eine beliebige Anzahl von Objekten durchgeführt. Darüber hinaus kann bei der Objekterkennung eine beliebige Anzahl von Eigenschaften E1, E2, E3 der Objekte O1, O2, O3 durch die zweite Recheneinheit 205 ermittelt werden. Im Verfahrensschritt 103 kann darüber hinaus eine beliebige Anzahl von durch die zweite Recheneinheit 205 ermittelten Eigenschaft P1', P2', P3' mit entsprechenden Referenzen P verglichen werden.

FIG 4 zeigt eine schematische Darstellung eines Computerprogrammprodukts 300.

Figur 4 zeigt ein Computerprogrammprodukt 300, umfassend Befehle, die bei der Ausführung des Programms durch eine Recheneinheit dieses veranlassen, das erfindungsgemäße Verfahren auszuführen. Das Computerprogrammprodukt 300 ist in der gezeigten Ausführungsform auf einem Speichermedium 301 gespeichert. Das Speichermedium 301 kann hierbei ein beliebiges aus dem Stand der Technik bekanntes Speichermedium sein.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 100: Verfahren zum Steuern eines Stellgliedes
- 101: Bestimmen von Eigenschaften eines Objekts
- 103: Vergleichen einer Eigenschaft mit einer Referenz
- 105: Steuern des Stellgliedes
- 107: Bereitstellen eines weiteren Objekts
- 109: Bestimmen von Eigenschaften des weiteren Objekts
- 111: Vergleichen einer Anzahl von Eigenschaften mit Referenzen

- 200: System
- 201: Stellglied
- 203: Recheneinheit
- 205: zweite Recheneinheit
- 207: Sensoreinheit
- 209: künstliche Intelligenz
- 211: Datenverbindung
- 213: Raumbereich

- 300: Computerprogrammprodukt
- 301: Speichermedium

- O1: Objekt
- O2: Objekt
- O3: Objekt
- E1: Eigenschaften des Objekts
- E2: Eigenschaften des Objekts
- E3: Eigenschaften des Objekts
- P1: wenigstens eine Eigenschaft des Objekts
- P2: wenigstens eine Eigenschaft des Objekts
- P3: wenigstens eine Eigenschaft des Objekts
- E1': durch zweite Recheneinheit bestimmte Eigenschaften
- E2': durch zweite Recheneinheit bestimmte Eigenschaften
- E3': durch zweite Recheneinheit bestimmte Eigenschaften
- P1': durch zweite Recheneinheit bestimmte eine Eigenschaft
- P2': durch zweite Recheneinheit bestimmte eine Eigenschaft
- P3': durch zweite Recheneinheit bestimmte eine Eigenschaf
- OR: weiteres Objekt
- ER: Eigenschaften des zweiten Objekts
- PR: wenigstens eine Eigenschaft des zweiten Objekts
- PR2: weitere Eigenschaft des zweiten Objekts
- QR: erste Anzahl von Eigenschaften des zweiten Objekts
- ER': durch zweite Recheneinheit bestimmte Eigenschaften
- PR': durch zweite Recheneinheit bestimmte eine Eigenschaft
- QR': durch zweite Recheneinheit bestimmte erste Anzahl von Eigenschaften

## Patentansprüche

1. Verfahren (100) zum Steuern eines Stellgliedes (201) einer Vorrichtung mit einer Recheneinheit (203), umfassend:
- Erkennen (101) eines Objekts (O1, O2, O3) und Ermitteln von Eigenschaften (E1', E2', E3') des Objekts (O1, O2, O3) durch eine zweite Recheneinheit (205) basierend auf Sensorsignalen wenigstens einer Sensoreinheit (207);
- Vergleichen (103) wenigstens einer Eigenschaft (P1', P2', P3') der durch die zweite Recheneinheit (205) ermittelten Eigenschaften (E1', E2', E3') des Objekts (O1, O2, O3) mit einer entsprechenden Referenz (P) durch die Recheneinheit (203);
- Steuern (105) des Stellgliedes (201) unter Berücksichtigung der durch die zweite Recheneinheit (205) ermittelten Eigenschaften (E1', E2', E3') des Objekts (O1, O2, O3) durch die Recheneinheit (203), wenn die wenigstens eine Eigenschaft (P1', P2', P3') der durch die zweite Recheneinheit (205) ermittelten Eigenschaften (E1', E2', E3') eine vorgegebene Ähnlichkeit zu der Referenz (P) aufweist;
- Bereitstellen (107) eines weiteren Objekts (OR), das in der wenigstens einen Eigenschaft (P1, P2, P3, PR) mit dem Objekt (O1, O2, O3) übereinstimmt;
- Erkennen (109) des weiteren Objekts (OR) und Ermitteln von Eigenschaften (ER) des weiteren Objekts (OR) durch die zweite Recheneinheit (205) basierend auf Sensorsignalen der Sensoreinheit (207);
- Vergleichen (111) einer ersten Anzahl (QR') der durch die zweite Recheneinheit (205) ermittelten Eigenschaften (ER') des weiteren Objekts (OR) mit einer entsprechenden Anzahl von Referenzen (QR) durch die Recheneinheit (203), wobei die erste Anzahl von Eigenschaften (QR) die wenigstens eine Eigenschaft (P1, P2, P3) und wenigstens eine weitere Eigenschaft (PR2) umfasst; und
- Steuern (105) des Stellgliedes (201) unter Berücksichtigung der durch die zweite Recheneinheit (205) ermittelten Eigenschaften (E1', E2', E3') des Objekts (O1, O2, O3) durch die Recheneinheit (203), wenn jede Eigenschaft (QR') der ersten Anzahl der durch die zweite Recheneinheit (205) ermittelten Eigenschaften (ER') des weiteren Objekts (OR) eine vorgegebene Ähnlichkeit zu einer entsprechenden Referenz (QR) aufweist;
**dadurch gekennzeichnet. dass**
durch die Recheneinheit (203) das Stellglied (201) unter Berücksichtigung der von der zweiten Recheneinheit (205) ermittelten Eigenschaften (E1', E2', E3') des Objekts (O1, O2, O3) für einen vorbestimmten Zeitraum gesteuert wird, wenn jede Eigenschaft (QR') der ersten Anzahl der durch die zweite Recheneinheit (205) ermittelten Eigenschaften (ER') des weiteren Objekts (OR) eine vorgegebene Ähnlichkeit zu der entsprechenden Referenz (QR) aufweist.

2. Verfahren (100) nach Anspruch 1,
wobei das Erkennen (101, 109) der Objekte (O1, O2, O3, OR) durch die zweite Recheneinheit (205) für einen vordefinierten Raumbereich (213) durchgeführt wird, und wobei der Recheneinheit (203) vor dem Erkennen der Objekte (O1, O2, O3, OR) durch die zweite Recheneinheit (205) eine Information über eine Anzahl der Objekte (O1, O2, O3, OR) innerhalb des Raumbereichs (213) bereitgestellt ist.

3. Verfahren (100) nach Anspruch 2, wobei für jedes Objekt (O1, O2, O3, OR) beim Zugang in den Raumbereich (213) eine Registrierungsinformation erstellt wird, und wobei die Registrierungsinformation der Recheneinheit (203) bereitgestellt wird.

4. Verfahren (100) nach Anspruch 1, 2 oder 3, wobei das Bereitstellen (107) des weiteren Objekts (OR), das Erkennen (109) des weiteren Objekts (OR) und das Ermitteln der Eigenschaften (ER') des weiteren Objekts (OR) durch die zweite Recheneinheit (205) basierend auf Sensorsignalen der Sensoreinheit (207), und das Vergleichen (111) der ersten Anzahl der durch die zweite Recheneinheit (205) ermittelten Eigenschaften (QR') des weiteren Objekts (OR) mit einer entsprechenden Anzahl von Referenzen (QR) durch die Recheneinheit (203) gemäß einem vorbestimmten Zeitplan vor und/oder während des Steuerns des Stellgliedes (2013) durchgeführt wird.

5. Verfahren (100) nach einem der voranstehenden Ansprüche, wobei durch die zweite Recheneinheit (205) basierend auf den Sensorsignalen der Sensoreinheit (207) eine Mehrzahl von Objekten (O1, O2, O3) erkannt und für jedes Objekt (O1, O2, O3) Eigenschaften (E1', E2', E3') ermittelt werden, und wobei durch die Recheneinheit (203) für jedes Objekt (O1, O2, O3) eine Mehrzahl von ersten Eigenschaften (P1', P2', P3') mit einer Mehrzahl von Referenzen (P) verglichen wird.

6. Verfahren (100) nach einem der voranstehenden Ansprüche, wobei die zweite Recheneinheit (205) wenigstens eine zur Objekterkennung und Ermittlung von Eigenschaften trainierte künstliche Intelligenz (209) umfasst.

7. Verfahren (100) nach einem der voranstehenden Ansprüche, wobei die Sensoreinheit (207) eine optische Sensoreinheit ist, und wobei die Eigenschaften (E1, E2, E3, ER) der Objekte (O1, O2, O3, OR) optisch detektierbare Eigenschaften sind.

8. Verfahren (100) nach einem der voranstehenden Ansprüche, wobei die Objekte (O1, O2, O3, OR) Personen umfassen, und wobei die Eigenschaften (E1, E2, E3, ER) der Objekte Positionen und/oder optische Markierungen der Personen umfassen.

9. Verfahren (100) nach einem der voranstehenden Ansprüche, wobei die Objekte (O1, O2, O3, OR) Schienenfahrzeuge umfassen, und wobei die Eigenschaften (E1, E2, E3, ER) der Objekte Positionen und/oder optische Markierungen und/oder Bauarten der Schienenfahrzeuge umfassen.

10. Verfahren (100) nach einem der voranstehenden Ansprüche, wobei die Referenzen (Q, P) Eigenschaften (QR, P1, P2, P3, PR) der Objekte (O1, O2, O3, OR) entsprechen, die vor Bestimmung durch die zweite Recheneinheit (205) bekannt und der Recheneinheit (203) bereitgestellt sind.

11. Computerprogrammprodukt (300) umfassend Befehle, die bei der Ausführung des Programms durch eine : Recheneinheit und eine zweite Recheneinheit diese Recheneinheiten veranlassen, das Verfahren (100) nach einem der vorhergehenden Ansprüche auszuführen.

12. System (200) mit einer Recheneinheit (203) und einer zweiten Recheneinheit (205), die ausgebildet sind, um ein Verfahren (100) nach einem der Ansprüche 1 bis 10 auszuführen.

## Claims

1. Method (100) for controlling an actuator (201) of a device with a computing unit (203), comprising:
- recognition (101), by a second computing unit (205), of an object (O1, O2, O3) and ascertainment of properties (E1', E2', E3') of the object (O1, O2, O3) on the basis of sensor signals of at least one sensor unit (207);
- comparison (103), by the computing unit (203), of at least one property (P1', P2', P3') of the properties (E1', E2', E3') of the object (O1, O2, O3) ascertained by the second computing unit (205) with a corresponding reference (P);
- control (105) of the actuator (201), taking into account the properties (E1', E2', E3') of the object (O1, O2, O3) ascertained by the second computing unit (205) if the at least one property (P1', P2', P3') of the properties (E1', E2', E3') ascertained by the second computing unit (205) has a predetermined similarity to the reference (P);
- preparation (107) of a further object (OR) which corresponds to the object (O1, O2, O3) in the at least one property (P1, P2, P3, PR);
- recognition (109) of the further object (OR) and ascertainment of properties (ER) of the further object (OR) by the second computing unit (205) on the basis of sensor signals of the sensor unit (207);
- comparison (111), by the computing unit (203), of a first number (QR') of the properties (ER') of the further object (OR) ascertained by the second computing unit (205) with a corresponding number of references (QR), wherein the first number of properties (QR) comprises the at least one property (P1, P2, P3) and at least one further property (PR2); and
- control (105) of the actuator (201) taking into account the properties (E1', E2', E3') of the object (O1, O2, O3) ascertained by the second computing unit (205) if each property (QR') of the first number of properties (ER') ascertained by the second computing unit (205) has a predetermined similarity to a corresponding reference (QR);
**characterised in that**
the actuator (201) is controlled by the computing unit (203) for a predetermined period of time taking into account the properties (E1', E2', E3') of the object (O1, O2, O3) ascertained by the second computing unit (205) if each property (QR') of the first number of properties (ER') of the further object (OR) ascertained by the second computing unit (205) has a predetermined similarity to the corresponding reference (QR).

2. Method (100) according to claim 1, wherein the recognition (101, 109) of the objects (O1, O2, O3, OR) by the second computing unit (205) is carried out for a predefined spatial region (213), and wherein an item of information about a number of objects (O1, O2, O3, OR) within the spatial domain (213) is provided to the computing unit (203) prior to the recognition of the objects (O1, O2, O3, OR) by the second computing unit (205).

3. Method (100) according to claim 2, wherein an item of registration information is created for each object (O1, O2, O3, OR) when the spatial region (213) is accessed, and wherein the item of registration information is provided to the computing unit (203).

4. Method according to claim 1, 2 or 3, wherein the provision (107) of the further object (OR), the recognition (109) of the further object (OR) and the ascertainment of the properties (ER') of the further object (OR) by the second computing unit (205) is carried out on the basis of sensor signals of the sensor unit (207), and the comparison (111) of the first number of properties (QR') of the further object (OR) ascertained by the second computing unit (205) with a corresponding number of references (QR) by the computing unit (203) is carried out according to a prespecified time plan prior to and/or during the control of the actuator (2013).

5. Method (100) according to one of the preceding claims, wherein a plurality of objects (O1, O2, O3) is recognised and properties (E1', E2', E3') are ascertained for each object (O1, O2, O3) by the second computing unit (205) on the basis of the sensor signals of the sensor unit (207), and wherein a plurality of first properties (P1', P2', P3') is compared with a plurality of references (P) by the computing unit (203) for each object (O1, O2, O3).

6. Method (100) according to one of the preceding claims, wherein the second computing unit (205) comprises at least one element of trained artificial intelligence (209) for object recognition and ascertainment of properties.

7. Method (100) according to one of the preceding claims, wherein the sensor unit (207) is an optical sensor unit, and wherein the properties (E1, E2, E3, ER) of the objects (O1, O2, O3, O4) are optically detectable properties.

8. Method (100) according to one of the preceding claims, wherein the objects (O1, O2, O3, O4) comprise persons, and wherein the properties (E1, E2, E3, ER) of the objects comprise positions and/or optical markers of the persons.

9. Method (100) according to one of the preceding claims, wherein the objects (O1, O2, O3, OR) comprise rail vehicles, and wherein the properties (E1, E2, E3, ER) of the objects comprise positions and/or optical markers and/or design types of the rail vehicles.

10. Method (100) according to one of the preceding claims, wherein the references (Q, P) correspond to properties (QR, P1, P2, P3) of the objects (O1, O2, O3, OR), which are known before determination by the second computing unit (205) and are provided to the computing unit (203).

11. Computer program product (300) comprising commands, which, upon execution of the program by a computing unit and a second computing unit, prompt these computing units to carry out the method (100) according to one of the preceding claims.

12. System (200) with a computing unit (203) and a second computing unit (205) which are designed to carry out a method (100) according to one of claims 1 to 10.

## Revendications

1. Procédé (100) de commande d'un actionneur (201) d'une installation par une unité (203) informatique, dans lequel :
- on détecte (101) un objet (O1, O2, O3) et on détermine des propriétés (E1', E2', E3') de l'objet (O1, O2, O3) par une deuxième unité (205) informatique sur la base de signaux de capteur d'au moins une unité (207) de capteur ;
- on compare (103), par l'unité (203) informatique, à une référence (P) correspondante au moins une propriété (P1', P2', P3') parmi les propriétés (E1', E2', E3') de l'objet (O1, O2, O3) déterminées par la deuxième unité (205) informatique ;
- on commande (105) l'actionneur (201) par l'unité (203) informatique, en tenant compte des propriétés (E1', E2', E3') de l'objet (O1, O2, O3) déterminées par la deuxième unité (205) informatique, si la au moins une propriété (P1', P2', P3') parmi les propriétés (E1', E2', E3') déterminées par la deuxième unité (205) informatique a une similitude donnée à l'avance avec la première référence (P) ;
- on se procure (107) un autre objet (OR), qui coïncide dans la au moins une propriété (P1, P2, P3, PR) avec l'objet (O1, O2, O3) ;
- on détecte (109) l'autre objet (OR) et on détermine des propriétés (ER) de l'autre objet (OR) par la deuxième unité (205) informatique sur la base de signaux de capteur de l'unité (207) de capteur ;
- on compare (111), par l'unité (203) informatique, un premier nombre (QR') des propriétés (ER') de l'autre objet (OR), déterminées par la deuxième unité (205) informatique, à un nombre correspondant de références (QR), dans lequel le premier nombre de propriétés (QR) comprend la au moins une propriété (P1, P2, P3) et au moins une autre propriété (PR2) ; et
- on commande (105) l'actionneur (201) par l'unité (203) informatique, en tenant compte des propriétés (E1', E2', E3') de l'objet (O1, O2, O3) déterminées par la deuxième unité (205) informatique, si chaque propriété (QR') du premier nombre des propriétés (ER') de l'autre objet (OR), déterminées par la deuxième unité (205) informatique, a une similitude donnée à l'avance avec une référence (QR) correspondante ;
**caractérisé en ce que**
on commande, pendant un laps de temps déterminé à l'avance par l'unité (203) informatique, l'actionneur (201), en tenant compte des propriétés (E1', E2', E3') de l'objet (O1, O2, O3) déterminées par la deuxième unité (205) informatique, si chaque propriété (QR') du premier nombre des propriétés (ER') de l'autre objet (OR), déterminées par la deuxième unité (205) informatique, a une similitude donnée à l'avance avec la référence (QR) correspondante.

2. Procédé (100) suivant la revendication 1,
dans lequel on effectue la détection (101, 109) des objets (O1, O2, O3, OR) dans la deuxième unité (205) informatique pour une partie (213) de l'espace définie à l'avance, et dans lequel il est mis à disposition de l'unité (203) informatique, avant la détection des objets (O1, O2, O3, OR) par la deuxième unité (205) informatique, une information sur un nombre des objets (O1, O2, O3, OR) dans la partie (213) de l'espace.

3. Procédé (100) suivant la revendication 2, dans lequel, pour chaque objet (O1, O2, O3, OR) lors de l'accès dans la partie (213) de l'espace, on établit une information d'enregistrement, et dans lequel on met l'information d'enregistrement à disposition de l'unité (203) informatique.

4. Procédé (100) suivant la revendication 1, 2 ou 3, dans lequel on effectue, suivant un plan dans le temps déterminé à l'avance avant et/ou pendant la commande de l'actionneur (2013), la mise à disposition (107) de l'autre objet (OR), la détection (109) de l'autre objet (OR) et la détermination des propriétés (ER') de l'autre objet (OR) par la deuxième unité (205) informatique sur la base de signaux de capteur de l'unité (207) de capteur, et la comparaison (111), par l'unité (203) informatique du premier nombre des propriétés (QR') de l'autre objet (OR), déterminées par la deuxième unité (205) informatique, à un nombre correspondant de références (QR).

5. Procédé (100) suivant l'une des revendications précédentes, dans lequel on détecte, par la deuxième unité (205) informatique sur la base des signaux de capteur de l'unité (207) de capteur, une pluralité d'objets (O1, O2, O3) et détermine, pour chaque objet (O1, O2, O3), des propriétés (E1', E2', E3'), et dans lequel on compare, par l'unité (203) informatique pour chaque objet (O1, O2, O3), une pluralité de premières propriétés (P1', P2', P3') à une pluralité de références (P).

6. Procédé (100) suivant l'une des revendications précédentes, dans lequel la deuxième unité (205) informatique comprend au moins une intelligence artificielle ayant subi un apprentissage pour la détection d'objets et la détermination de propriétés.

7. Procédé (100) suivant l'une des revendications précédentes, dans lequel l'unité (207) de capteur est une unité de capteur optique, et dans lequel les propriétés (E1, E2, E3, ER) des objets (O1, O2, O3, OR) sont des propriétés détectables optiquement.

8. Procédé (100) suivant l'une des revendications précédentes, dans lequel les objets (O1, O2, O3, OR) comprennent des personnes, et dans lequel les propriétés (E1, E2, E3, ER) des objets comprennent des positions et/ou des repères optiques des personnes.

9. Procédé (100) suivant l'une des revendications précédentes, dans lequel les objets (O1, O2, O3, OR) comprennent des véhicules ferroviaires, et dans lequel les propriétés (E1, E2, E3, ER) des objets comprennent des positions et/ou des repères optiques et/ou des types de construction des véhicules ferroviaires.

10. Procédé (100) suivant l'une des revendications précédentes, dans lequel les références (Q, P) correspondent à des propriétés (QR, P1, P2, P3, PR) des objets (O1, O2, O3, OR), qui sont connues avant la détermination par la deuxième unité (205) informatique et qui sont mises à disposition de l'unité (203) informatique.

11. Produit (300) de programme d'ordinateur comprenant des instructions qui, lors de l'exécution du programme par une unité informatique et par une deuxième unité informatique, font que ces unités informatiques exécutent le procédé (100) suivant l'une des revendications précédentes.

12. Système (200) comprenant une unité (203) informatique et une deuxième unité (205) informatique, qui sont constituées pour exécuter un procédé (100) suivant l'une des revendications 1 à 10.
